(19)

Europäisches Patentamt
European Patent Office
Office européen des brevets

(11) **EP 3 012 828 A1**

(12) **EUROPEAN PATENT APPLICATION**
published in accordance with Art. 153(4) EPC

(43) Date of publication:
**27.04.2016 Bulletin 2016/17**

(21) Application number: **13887433.4**

(22) Date of filing: **19.06.2013**

(51) Int Cl.:
**G09G 5/26** (2006.01)

(86) International application number:
**PCT/CN2013/077486**

(87) International publication number:
**WO 2014/201642 (24.12.2014 Gazette 2014/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Yulong Computer Telecommunication Scientific (Shenzhen) Co. Ltd.**
**Shenzhen, Guangdong 518057 (CN)**
• **Dongguan Yulong Telecommunication Tech Co. Ltd.**
**Guangdong 523808 (CN)**

(72) Inventors:
• **XU, Siwei**
**Shenzhen**
**Guangdong 518057 (CN)**
• **CHEN, Guangzeng**
**Shenzhen**
**Guangdong 518057 (CN)**

(74) Representative: **Johnson, Richard Alan et al**
**Mewburn Ellis LLP**
**City Tower**
**40 Basinghall Street**
**London EC2V 5DE (GB)**

(54) **SMART WATCH AND DISPLAY METHOD FOR SMART WATCH**

(57)     The present invention provides a smart watch which includes a posture monitoring unit configured to monitor a posture of the smart watch in real time and determine a normal display region of the smart watch according to the posture, and a displaying unit configured to display content to be displayed in the normal display region. The present invention further provides a display method for a smart watch. By means of the technical solution of the present invention, which region of a smart watch can be seen by a user can be determined according to a posture of the smart watch, so that the brightness of the region can be set to be the normal brightness, and the brightness of the other region which cannot be seen by the user can be reduced, thereby prolonging the battery life of the smart watch and improving user's experience.

FIG. 2

**Description**

FIELD OF THE TECHNICAL

The present disclosure relates to smart watch technology field, and particularly to a smart watch and a display method for a smart watch.

BACKGROUND

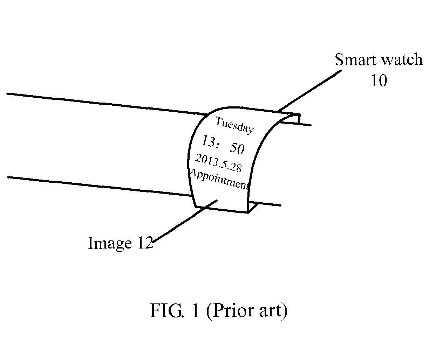

For a existing smart watch, a display screen covers a wristband of the smart watch, and the whole display screen is used to display content. For example, the display screen takes up the outer surface of the smart watch or a dot matrix screen covers the whole wristband of the smart watch. As shown in FIG. 1, when the smart watch 10 displays an image, the image 12 nearly takes up a half of the screen of the smart watch, and goes across 180° in space. When a user wants to watch content, all display regions of the ring-shaped display screen will be lighted to allow the user to perform an operation.

The shortcomings of this solution is that when the integral part of the wristband of the smart watch is used as the display region, not the whole display region is within the user sight (only the top part of the smart watch can be seen by the user). When the whole display region is lighted normally, the region not within the user sight is not useful for the user. For example, as shown in FIG. 1, when the user views the image 12 from up, the user can only see the image within the scope of 90 degrees, and words at two ends of the image 12 cannot be seen by the user. Therefore, there is no need to light the region which cannot be seen by the user, otherwise additional power consumption will be generated, and burdens of the smart watch will increase.

Also, not the display of all kinds of information will take up the whole screen. When a message which length is smaller (for example, time or a simple short message) is displayed, lighting the whole screen normally will consume a great power of the smart watch, thereby decreasing experience of using the smart watch.

Therefore, what is needed is a new display technology. By means of the technology, which region of the smart watch can be seen by the user can be determined according to a posture of the smart watch, and accordingly the region is set to be a normal display region of the smart watch. Based on this, adjusting brightness of display regions can be realized, to prolong the battery life of the smart watch, and improve user's experience.

SUMMARY

Based on the above mentioned problems, a display technology is provided. By means of the display technology, which region of a smart watch can be seen by a user can be determined according to a posture of the smart watch, so that the brightness of the region can be set to be the normal brightness, and the brightness of the other region which cannot be seen by the user can be reduced, thereby prolonging the battery life of the smart watch and improving user's experience.

The present invention provides a smart watch which includes a posture monitoring unit configured to monitor a posture of the smart watch in real time and determine a normal display region of the smart watch according to the posture, and a displaying unit configured to display content to be displayed in the normal display region.

In the technical solution, the posture monitoring unit can be one or more G-sensors and can detect the posture of the smart watch in space. For example, if lie flat, a ring of the smart watch is parallel to the horizontal plane. When the ring of the smart watch is vertical to the horizontal plane, it indicates that a user makes the smart watch up to watch the time. When the user watches a ring arranged vertically, the user can only see a portion of the ring which faces himself/herself. Thus when the smart watch is in this posture, if the user watches the smart watch, the user can only see a portion of the smart watch. Accordingly, the smart watch can determine which portion can be seen by the user according to the current posture, for example, the top region, or the inner region of the smart watch which is facing the user. This portion will be regarded as a normal display region and will be lighted in first preset brightness (for example, normal display brightness) to display an image, and the other region will be lighted in lower brightness to display an image since the other region cannot be seen by the user.

In the technical solution, preferably, the displaying unit may include a brightness setting unit configured to set the brightness of the normal display region to be the first preset brightness and set the brightness of the other region to be second preset brightness which is less than the first preset brightness.

In the technical solution, when the user wants to view the image displayed in the other region, the user can rotate his/her wrist to adjust the posture of the smart watch, to make the smart watch to redefine the normal display region, thus the region which can be seen by the user can be always lighted in normal brightness and the region which cannot be seen by the user can be always lighted in lower brightness, thereby reducing power consumption of the smart watch and prolonging the life of the battery of the smart watch.

In the technical solution, preferably, the posture monitoring unit includes an included angle determining sub-unit configured to compute the included angle between the plane where the ring of the smart watch stays and the horizontal plane and determine whether or not the included angle is within a preset angle range, and a region setting sub-unit configured to set the region the center of which is a vertex of the ring within the space and the area of which equals to a preset value to be the normal display region when the included angle determining sub-unit determines that the included angle is within the preset angle range.

In the technical solution, the posture of the smart watch can be determined by determining the included angle between the ring of the smart watch and the horizontal plane. When the included angle is within the preset angle range (e.g., 60° -90°), it indicates that to a greater degree the smart watch is vertical to the horizontal plane, and it can be determined that the user is watching the content displayed on the smart watch, and the top portion of the smart watch is set to be the normal display region.

It should be noted that the way of determining the posture of the smart watch can include but not limited to determination of the included angle.

In the technical solution, preferably, the brightness setting unit is further configured to set the brightness of all the regions of the smart watch to be the second preset brightness when the included angle determining sub-unit determines that the included angle is less than the preset angle.

In the technical solution, when the included angle is less than the preset angle, it indicates that to a greater degree the smart watch is parallel to the horizontal plane, and it can be determined that at this point the user does not watch the content displayed on the smart watch, thus the brightness of the whole display region of the smart watch can be reduced to reduce the power consumption.

In the technical solution, preferably, the region setting sub-unit is further configured to set the region the center of which is a target point of the ring and the area of which equals to the preset value to be the normal display region according to a received rotation command.

In the technical solution, the determination angle of the G-sensor can be adjusted, and accordingly the position of the normal display region on the smart watch can be adjusted. For example, if the determination angle of the G-sensor is rotated 180°, the determined normal display region is the bottom of the smart watch 100. Therefore, the user can normally watch the content displayed on the smart watch 100 when the user lays down. Certainly, the user can cause the normal display region to rotate inside or outside any degrees to adjust the normal display region according to needs.

In the technical solution, preferably, the smart watch can further include an image adjusting unit configured to determine an image region of the smart watch which is displaying an image, overlap the center of the image region with the center of the normal display region, and/or overlap the start margin of the image region with the start margin of the normal display region, and/or overlap the end margin of the image region with the end margin of the normal display region.

In the technical solution, the smart watch can automatically display the image in the normal display region, to light the center of the image in normal brightness. The smart watch can also overlap the start margin and/or the end margin of the image with the start margin and/or the end margin of the normal display region, to light the start portion or the end portion of the image in normal brightness, thereby facilitating the user to browse the image from the start or end position, and also facilitating the user to drag the image to view the other portion of the image.

In the technical solution, preferably, the brightness setting unit includes an area determining sub-unit configured to determine whether or not the area of the image region is greater than or equals to that of the normal display region, a brightness assigning sub-unit configured to light the portion of the image region outside of the normal display region in third preset brightness which is less than the first preset brightness and light the region of the smart watch no image is displayed in which in the second preset brightness when the area determining sub-unit determines that the area of the image region is greater than or equals to that of the normal display region. Wherein, the second preset brightness is less than the third preset brightness.

In the technical solution, when the area of the image displayed on the smart watch is greater than that of the normal display area, it indicates that a portion of the displayed image is displayed outside of the normal display region. However, as the center of the image still overlaps the center of the normal display region, a great portion of the image can be displayed in normal brightness. The portion of the image displayed outside of the normal display region can be displayed in the third preset brightness, and the region of the smart watch no image is displayed in which is lighted in the second preset brightness, thus power is saved, and also the display of the smart watch has layering effect. The brightness gradually decreases from the image displayed in the normal display region to the image displayed outside of the normal display region and to the region no image is displayed in which, thus the user can view the image more easily.

In the technical solution, preferably, the smart watch further includes an image moving unit configured to move the image region according to a received image movement command. The brightness assigning sub-unit is further configured to determine the portion of the image region outside of the normal display region in real time, and light the portion of the image region outside of the normal display region in the third preset brightness.

In the technical solution, the user can move the image according to needs, to cause the needed portion to be displayed in the normal display region (that is, to be displayed in normal brightness). At the same time, during moving the image, the portion of the image displayed outside of the normal display region is displayed in the third preset brightness, while the brightness of the normal display region stays unchanged. Accordingly, the portion which can be seen by the user can always stay in normal brightness, and the portion which cannot be directly seen can always stay in lower brightness.

In the technical solution, preferably, the smart watch can further include a region moving unit configured to move the normal display region according to a received region movement command. The brightness assigning sub-unit is further configured to determine the portion of the image region outside of the normal display region in real time, and light the portion of the image region outside of the normal display region in the third preset brightness.

In the technical solution, the user can move the normal display region according to needs, to cause the normal display region to more meet user's watching habits. For example, if the user does not vertically watch the content displayed on the smart watch from up, and the user watches the content with the line of sight deviating from the vertical direction 30°, the normal display region can be moved toward inside (that is, user side) 30°. At the same time, during moving the region, the portion of the image displayed outside of the normal display region is still displayed in the third preset brightness, while the brightness of the normal display region stays unchanged. Accordingly, the portion which can be seen by the user can always stay in normal brightness, and the portion which cannot be directly seen can always stay in lower brightness.

In the technical solution, preferably, the smart watch further includes a brightness adjusting unit configured to adjust the first preset brightness, the second preset brightness, and/or the third preset brightness according to a received brightness adjustment command.

In the technical solution, the user can adjust the brightness of each region of the smart watch to satisfy actual needs.

In any of the above technical solutions, preferably, the smart watch can further include a region adjusting unit configured to set the size and/or shape of the normal display region according to a received region setting command.

In the technical solution, the user can adjust each parameter of the display region according to needs, for example, prolong the display region or set the display region to be circular, to cause the display region to have strong characteristic and operability.

In any of the technical solutions, preferably, the smart watch further includes a face recognition unit configured to recognize face and/or eyes in real time when a preset function is started, and determine the normal display region according to the recognized face and/or eyes, to cause the normal display region to correspond to the recognized face and/or eyes.

In the technical solution, after the face and/or eye recognition function is started, a face recognition device and/or an eye recognition device of the smart watch can be used to recognize the face and/or eyes, to accurately determine which region of the smart watch is facing the user, thereby setting the region which is facing the user to be the normal display region, and causing the normal display region to more conform to user's vision.

In any of the technical solutions, preferably, the smart watch further includes a temperature detecting unit configured to detect the temperature of the inside surface of the smart watch, and reduce the brightness of the normal display region and/or reduce the brightness of the other region when the temperature of the inside surface is less than a preset temperature.

In the technical solution, whether or not the smart watch is worn by the user can be determined by detecting the temperature of the inside surface of the smart watch. If the temperature of the inside surface is less than a certain temperature, for example, 30 degrees, it indicates that at current time the smart watch is not worn by the user, thus the brightness of all the regions can be reduced.

The present invention further provides a display method for a smart watch which includes: step 202, monitoring a posture of the smart watch in real time and determining a normal display region of the smart watch according to the posture, and step 204, displaying the content to be displayed in the normal display region.

In the technical solution, one or more G-sensors can be employed to detect the posture of the smart watch in space. For example, if lie flat, a ring of the smart watch is parallel to the horizontal plane. When the ring of the smart watch is vertical to the horizontal plane, it indicates that a user makes the smart watch up to watch the time. When the user watches a ring arranged vertically, the user can only see a portion of the ring which faces himself/herself. Thus when the smart watch is in this posture, if the user watches the smart watch, the user can only see a portion of the smart watch. Accordingly, the smart watch can determine which portion can be seen by the user according to the current posture, for example, the top region, or the inner region of the smart watch which is facing the user. This portion will be regarded as a normal display region and will be lighted in first preset brightness (for example, normal display brightness) to display an image, and the other region will be lighted in lower brightness to display an image since the other region cannot be seen by the user.

In the technical solution, preferably, step 204 further includes setting the brightness of the normal display region to be first preset brightness and setting the brightness of the other region to be second preset brightness which is less than the first preset brightness.

In the technical solution, when the user wants to view the image displayed in the other region, the user can rotate his/her wrist to adjust the posture of the smart watch, to make the smart watch to redefine the normal display region, thus the region which can be seen by the user can be always lighted in normal brightness and the region which cannot be seen by the user can be always lighted in lower brightness, thereby reducing power consumption of the smart watch and prolonging the life of the battery of the smart watch.

In the technical solution, preferably, step 202 includes: step 2022, computing the included angle between the plane where the ring of the smart watch stays and the horizontal plane and determining whether or not the included angle is within a preset angle range, and step 2024, setting the region the center of which is a vertex of the ring within the space and the area of which equals to a preset value to be the normal display region when it is determined that the included angle is within the preset angle range.

In the technical solution, the posture of the smart watch can be determined by determining the included angle between the ring of the smart watch and the horizontal plane. When the included angle is within the preset angle range (e.g., 60° -90°), it indicates that to a greater degree the smart watch is vertical to the horizontal plane, and it can be determined that the user is watching the content displayed on the smart watch, and the top portion of the smart watch will be set to be the normal display region.

It should be noted that the way of determining the posture of the smart watch can include but not limited to determination of the included angle.

In the technical solution, preferably, step 202 further includes step 2026, setting the brightness of all the regions of the smart watch to be the second preset brightness when it is determined that the included angle is less than a preset angle.

In the technical solution, when the included angle is less than the preset angle, it indicates that to a greater degree the smart watch is parallel to the horizontal plane, and it can be determined that at this point the user does not watch the content displayed on the smart watch, thus the brightness of the whole display region of the smart watch can be reduced to reduce the power consumption.

In the technical solution, preferably, the display method further includes setting the region the center of which is a target point of the ring and the area of which equals to a preset value to be the normal display region according to a received rotation command.

In the technical solution, the determination angle of the G-sensor can be adjusted, and accordingly the position of the normal display region on the smart watch is adjusted. For example, if the determination angle of the G-sensor is rotated 180°, the determined normal display region is the bottom of the smart watch. Therefore, the user can normally watch the content displayed on the smart watch when the user lays down. Certainly, the user can cause the normal display region to rotate inside or outside any degrees to adjust the normal display region according to needs.

In the technical solution, preferably, step 204 further includes determining an image region of the smart watch which is displaying an image, overlapping the center of the image region with the center of the normal display region, and/or overlapping the start margin of the image region with the start margin of the normal display region, and/or overlapping the end margin of the image region with the end margin of the normal display region.

In the technical solution, the smart watch can automatically display the image in the normal display region, to light the center of the image in normal brightness. The smart watch can also overlap the start margin and/or the end margin of the image with the start margin and/or the end margin of the normal display region, to light the start portion or the end portion of the image in normal brightness, thereby facilitating the user to browse the image from the start or end position, and also facilitating the user to drag the image to view the other portion of the image.

In the technical solution, preferably, step 204 further includes determining whether or not the area of the image region is greater than or equals to that of the normal display region, lighting the portion of the image region outside of the normal display region in third preset brightness which is less than the first preset brightness and lighting the region of the smart watch no image is displayed in which in the second preset brightness when the area of the image region is greater than or equals to that of the normal display region. Wherein, the second preset brightness is less than the third preset brightness.

In the technical solution, when the area of the image displayed on the smart watch is greater than that of the normal display region, it indicates that a portion of the displayed image is displayed outside of the normal display region. However, as the center of the image still overlaps the center of the normal display region, a great portion of the image can be displayed in normal brightness. The portion of the image outside of the normal display region can be displayed in the third preset brightness, and the region of the smart watch no image is displayed in which is lighted in the second preset brightness, thus power is saved, and also the display of the smart watch has layering effect. The brightness gradually decreases from the image displayed in the normal display region to the image displayed outside of the normal display region and to the region no image is displayed in which, thus the user can view the image more easily.

In the technical solution, preferably, the display method further includes moving the image region according to a received image movement command, determining the portion of the image region outside of the normal display region in real time, and lighting the portion of the image region outside of the normal display region in the third preset brightness.

In the technical solution, the user can move the image according to needs, to cause the needed portion to be displayed in the normal display region (that is, to be displayed in normal brightness). At the same time, during moving the image, the portion of the image displayed outside of the normal display region is displayed in the third preset brightness, while the brightness of the normal display region stays unchanged. Accordingly, the portion which can be seen by the user can always stay in normal brightness, and the portion which cannot be directly seen can always stay in lower brightness.

In the technical solution, preferably, the display method further includes moving the normal display region according to a received region movement command, determining the portion of the image region outside of the normal display region in real time, and lighting the portion of the image region outside of the normal display region in the third preset brightness.

In the technical solution, the user can move the normal display region according to needs, to cause the normal display region to more meet user's watching habits. For example, if the user does not vertically watch the content displayed on the smart watch from up, and the user watches the content with the line of sight deviating from the vertical direction 30°, the normal display region can be moved toward inside (that is, user side) 30°. At the same time, during moving the region, the portion of the image displayed outside of the normal display region is displayed in the third preset brightness, while the brightness of the normal display region stays unchanged. Accordingly, the portion which can be seen by the user can always stay in normal brightness, and the portion which cannot be directly seen can always stay in lower brightness.

In the technical solution, preferably, the display method further includes adjusting the first preset brightness, the second preset brightness, and/or the third preset brightness according to a received brightness adjustment command.

In the technical solution, the user can adjust the brightness of each region of the smart watch to satisfy actual needs.

In any of the above mentioned technical solutions, preferably, the display method further includes setting the size and/or shape of the normal display region according to a received region setting command.

In the technical solution, the user can adjust each parameter of the display region according to needs, for example, prolong the display region or set the display region to be circular, to cause the display region to have strong characteristic and operability.

In any of the above mentioned technical solutions, preferably, before step 202, the display method further includes determining whether or not a preset function is started, going to step 203 if started, and going to step 202 if not started. Step 203 includes recognizing face and/or eyes in real time, and determining the normal display region according to the recognized face and/or eyes, to cause the normal display region to correspond to the recognized face and/or eyes.

In the technical solution, after the face and/or eye recognition function is started, a face recognition device and/or an eye recognition device of the smart watch can be used to recognize the face and/or eyes, to accurately determine which region of the smart watch is facing the user, thereby setting the region which is facing the user to be the normal display region, and causing the normal display region to more conform to user's vision.

In any of the above mentioned technical solutions, preferably, the display method further includes detecting the temperature of the inside surface of the smart watch, and decreasing the brightness of the normal display region and/or decreasing the brightness of the other region when the temperature of the inside surface is less than a preset temperature.

In the technical solution, whether or not the smart watch 100 is worn by the user can be determined by detecting the temperature of the inside surface of the smart watch. If the temperature of the inside surface is less than a certain temperature, for example, 30 degrees, it indicates that at current time the smart watch is not worn by the user, thus the brightness of all the regions can be reduced.

By means of the technical solution, which region of a smart watch can be seen by a user can be determined according to a posture of the smart watch, so that the brightness of the region can be set to be normal brightness, and the other region which cannot be seen by the user can be reduced, thereby prolonging the battery life of the smart watch and improving user's experience.

BRIEF DESCRIPTION OF THE DRAWINGS

FIG. 1 is a schematic view showing display effect of a smart watch in related art.
FIG. 2 is a block diagram of a smart watch in accordance with an exemplary embodiment of the present invention.
FIG. 3 is a flow chart of a display method for a smart watch in accordance with an exemplary embodiment of the present invention.
FIG. 4 is a detailed flow chart of a display method for a smart watch in accordance with an exemplary embodiment of the present invention.
FIG. 5 is a schematic view showing that a user is watching a smart watch in accordance with an exemplary embodiment of the present invention.
FIGs. 6A -6J are schematic views showing determination of a normal display region in accordance with an exemplary embodiment of the present invention.
FIGs. 7A -7D are schematic views showing display of a smart watch in accordance with an exemplary embodiment of the present invention.

DETAILED DESCRIPTION OF ILLUSTRATED EMBODIMENTS

To understand the above-mentioned purposes, features and advantages of the present disclosure more clearly, the present disclosure will be further described in detail below in combination with the accompanying drawings and the specific implementations. It should be noted that, the embodiments of the present application and the features in the embodiments may be combined with one another without conflicts.

Many specific details will be described below for sufficiently understanding the present disclosure. However, the present disclosure may also be implemented by adopting other manners different from those described herein. Accordingly, the protection scope of the present invention is not limited by the specific embodiments disclosed below.

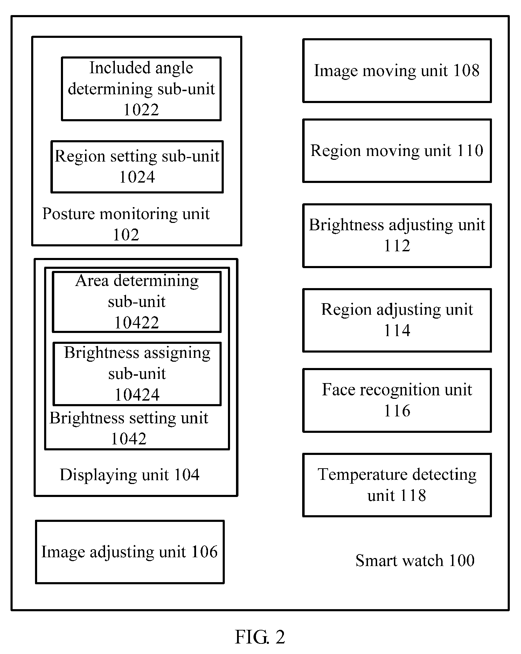

FIG. 2 is a block diagram of a smart watch in accordance with an exemplary embodiment of the present invention.

As shown in FIG. 2, a smart watch 100 in accordance with an exemplary embodiment of the present invention includes a posture monitoring unit 102 configured to monitor a posture of the smart watch 100 in real time and determine a normal display region of the smart watch 100 according to the posture, and a displaying unit 104 configured to display content to be displayed in the normal display region. The posture monitoring unit 102 can be one or more G-sensors and can detect the posture of the smart watch 100 in space. For example, if lie flat, a ring of the smart watch 100 is parallel to the horizontal plane. When the ring of the smart watch 100 is vertical to the horizontal plane, it indicates that a user makes the smart watch 100 up to watch the time. When the user watches a ring arranged vertically, the user can only see a portion of the ring which faces himself/herself. Thus when the smart watch 100 is in this posture, if the user watches the smart watch, the user can only see a portion of the smart watch 100. Accordingly, the smart watch 100 can determine which portion can be seen by the user according to the current posture, for example, the top region, or the inner region of the smart watch 100 which is facing the user. This portion will be regarded as a normal display region and will be lighted in first preset brightness (for example, normal display brightness) to display an image, and the other region will be lighted in lower brightness to display an image since the other region cannot be seen by the user.

Preferably, the displaying unit 104 includes a brightness setting unit 1042 configured to set the brightness of the normal display region to be first preset brightness and set the brightness of the other region to be second preset brightness which is less than the first preset brightness.

When the user wants to view the image displayed in the other region, the user can rotate his/her wrist to adjust the posture of the smart watch 100, to make the smart watch 100 to redefine the normal display region, thus the region which can be seen by the user can be always lighted in normal brightness and the region which cannot be seen by the user can be always lighted in lower brightness, thereby reducing power consumption of the smart watch 100 and prolonging the life of the battery of the smart watch 100.

Preferably, the posture monitoring unit 102 includes an included angle determining sub-unit 1022 configured to compute the included angle between the plane where the ring of the smart watch 100 stays and the horizontal plane and determine whether or not the included angle is within a preset angle range, and a region setting sub-unit 1024 configured to set the region the center of which is a vertex of the ring within the space and the area of which equals to a preset value to be the normal display region when the included angle determining sub-unit 1022 determines that the included angle is within the preset angle range.

Specifically, the posture of the smart watch 100 can be determined by determining the included angle between the ring of the smart watch 100 and the horizontal plane. When the included angle is within the preset angle range (e.g., 60° - 90°), it indicates that to a greater degree the smart watch 100 is vertical to the horizontal plane, and it can be determined that the user is watching the content displayed on the smart watch 100, and the top portion of the smart watch 100 is set to be the normal display region.

It should be noted that the way of determining the posture of the smart watch 100 can include but not limited to determination of the included angle.

Preferably, the brightness setting unit 1042 is further configured to set the brightness of all the regions of the smart watch 100 to be the second preset brightness when the included angle determining sub-unit 1022 determines that the included angle is not within the preset angle range.

When the included angle is less than the preset angle, it indicates that to a greater degree the smart watch 100 is parallel to the horizontal plane, and it can be determined that at this point the user does not watch the content displayed on the smart watch 100, thus the brightness of the whole display region of the smart watch 100 can be reduced to reduce the power consumption.

Preferably, the region setting sub-unit 1024 is further configured to set the region the center of which is a target point of the ring and the area of which equals to a preset value to be the normal display region according to a received rotation command.

The determination angle of the G-sensor can be adjusted, and accordingly the position of the normal display region on the smart watch 100 can be adjusted. For example, if the determination angle of the G-sensor is rotated 180°, the determined normal display region is the bottom of the smart watch 100. Therefore, the user can normally watch the content displayed on the smart watch 100 when the user lays down. Certainly, the user can cause the normal display region to rotate inside or outside any degrees to adjust the normal display region according to needs.

Preferably, the smart watch 100 can further include an image adjusting unit 106 configured to determine an image region of the smart watch 100 which is displaying an image, overlap the center of the image region with the center of the normal display region, and/or overlap the start margin of the image region with the start margin of the normal display region, and/or overlap the end margin of the image region with the end margin of the normal display region.

The smart watch 100 can automatically display the image in the normal display region, to light the center of the image in normal brightness. The smart watch 100 can also overlap the start margin and/or the end margin of the image with the start margin and/or the end margin of the normal display region, to light the start portion or the end portion of the image in normal brightness, thereby facilitating the user to browse the image from the start or end position, and also facilitating the user to drag the image to view the other portion of the image.

Preferably, the brightness setting unit 1042 includes an area determining sub-unit 10422 configured to determine whether or not the area of the image region is greater than or equals to that of the normal display region, a brightness assigning sub-unit 10424 configured to light the portion of the image region outside of the normal display region in third preset brightness which is less than the first preset brightness and light the region of the smart watch no image is displayed in which in the second preset brightness when the area determining sub-unit 10422 determines that the area of the image region is greater than or equals to that of the normal display region. Wherein, the second preset brightness is less than the third preset brightness.

If the area of the image displayed on the smart watch 100 is greater than that of the normal display area, it indicates that a portion of the displayed image is displayed outside of the normal display region. However, as the center of the image still overlaps the center of the normal display region, a great portion of the image can be displayed in normal brightness. The portion of the image displayed outside of the normal display region can be displayed in the third preset brightness, and the region of the smart watch 100 no image is displayed in which is lighted in the second preset brightness, thus power is saved, and also the display of the smart watch 100 has layering effect. The brightness gradually decreases from the image displayed in the normal display region to the image displayed outside of the normal display region and to the region no image is displayed in which, thus the user can view the image more easily.

Preferably, the smart watch 100 further includes an image moving unit 108 configured to move the image region according to a received image movement command. The brightness assigning sub-unit 10424 is further configured to determine the portion of the image region outside of the normal display region in real time, and light the portion of the image region outside of the normal display region in the third preset brightness.

The user can move the image according to needs, to cause the needed portion to be displayed in the normal display region (that is, to be displayed in normal brightness). At the same time, during moving the image, the portion of the image displayed outside of the normal display region is displayed in the third preset brightness, while the brightness of the normal display region stays unchanged. Accordingly, the portion which can be seen by the user can always stay in normal brightness, and the portion which cannot be directly seen can always stay in lower brightness.

Preferably, the smart watch 100 can further include a region moving unit 110 configured to move the normal display region according to a received region movement command. The brightness assigning sub-unit 10424 is further configured to determine the portion of the image region outside of the normal display region in real time, and light the portion of the image region outside of the normal display region in the third preset brightness.

The user can move the normal display region according to needs, to cause the normal display region to more meet user's watching habits. For example, if the user does not vertically watch the content displayed on the smart watch 100 from up, and the user watches the content with the line of sight deviating from the vertical direction 30°, the normal display region can be moved toward inside (that is, user side) 30°. At the same time, during moving the region, the portion of the image displayed outside of the normal display region is still displayed in the third preset brightness, while the brightness of the normal display region stays unchanged. Accordingly, the portion which can be seen by the user can always stay in normal brightness, and the portion which cannot be directly seen can always stay in lower brightness.

Preferably, the smart watch 100 further includes a brightness adjusting unit 112 configured to adjust the first preset brightness, the second preset brightness, and/or the third preset brightness according to a received brightness adjustment command.

The user can adjust the brightness of each region of the smart watch 100 to satisfy actual needs.

Preferably, the smart watch 100 can further include a region adjusting unit 114 configured to set the size and/or shape of the normal display region according to a received region setting command.

The user can adjust each parameter of the display region according to needs, for example, prolong the display region or set the display region to be circular, to cause the display region to have strong characteristic and operability.

Preferably, the smart watch 100 further includes a face recognition unit 116 configured to recognize face and/or eyes in real time when a preset function is started, and determine the normal display region according to the recognized face and/or eyes, to cause the normal display region to correspond to the recognized face and/or eyes.

After the face and/or eye recognition function is started, a face recognition device and/or an eye recognition device of the smart watch 100 can be used to recognize the face and/or eyes, to accurately determine which region of the smart watch 100 is facing the user, thereby setting the region which is facing the user to be the normal display region, and causing the normal display region to more conform to user's vision.

Preferably, the smart watch 100 further includes a temperature detecting unit 118 configured to detect the temperature of the inside surface of the smart watch 100, and decrease the brightness of the normal display region and/or decrease the brightness of the other region when the temperature of the inside surface is less than a preset temperature.

Whether or not the smart watch 100 is worn by the user can be determined by detecting the temperature of the inside surface of the smart watch 100. If the temperature of the inside surface is less than a certain temperature, for example, 30 degrees, it indicates that at current time the smart watch 100 is not worn by the user, thus the brightness of all the regions can be reduced.

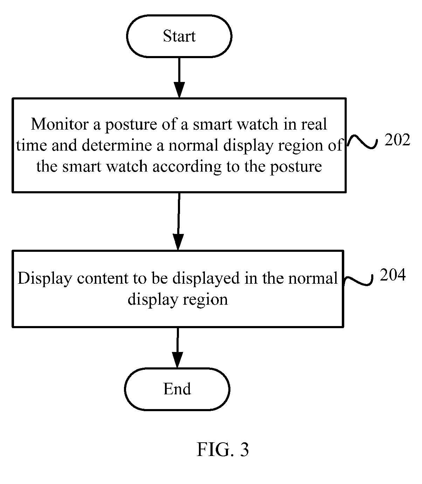

FIG. 3 is a flow chart of a display method for a smart watch in accordance with an exemplary embodiment of the present invention.

As shown in FIG. 3, a display method for a smart watch in accordance with an exemplary embodiment of the present invention includes: step 202, monitoring a posture of the smart watch in real time and determining a normal display region of the smart watch according to the posture, and step 204, displaying content to be displayed in the normal display region.

One or more G-sensors can be employed to detect the posture of the smart watch in a space. For example, if lie flat, a ring of the smart watch is parallel to the horizontal plane. When the ring of the smart watch is vertical to the horizontal plane, it indicates that a user makes the smart watch up to watch the time. When the user watches a ring arranged vertically, the user can only see a portion of the ring which faces himself/herself. Thus when the smart watch is in this posture, if the user watches the smart watch, the user can only see a portion of the smart watch. Accordingly, the smart watch can determine which portion can be seen by the user according to the current posture, for example, the top region, or the inner region of the smart watch which is facing the user. This portion will be regarded as a normal display region and will be lighted in first preset brightness (for example, normal display brightness) to display an image, and the other region will be lighted in lower brightness to display an image since the other region cannot be seen by the user.

When the user wants to view the image displayed in the other region, the user can rotate his/her wrist to adjust the posture of the smart watch, to make the smart watch to redefine the normal display region, thus the region which can be seen by the user can be always lighted in normal brightness and the region which cannot be seen by the user can be always lighted in lower brightness, thereby decreasing power consumption of the smart watch and prolonging the life of the battery of the smart watch.

Preferably, step 202 includes: step 2022, computing the included angle between the plane where the ring of the smart watch stays and the horizontal plane and determining whether or not the included angle is within a preset angle range, and step 2024, setting the region the center of which is a vertex of the ring within the space and the area of which equals to a preset value to be the normal display region when it is determined that the included angle is within the preset angle range.

Preferably, step 204 further includes setting the brightness of the normal display region to be the first preset brightness and setting the brightness of the other region to be second preset brightness which is less than the first preset brightness.

Specifically, the posture of the smart watch can be determined by determining the included angle between the ring of the smart watch and the horizontal plane. When the included angle is within the preset angle range (e.g., 60°-90°), it indicates that to a greater degree the smart watch is vertical to the horizontal plane, and it can be determined that the user is watching the content displayed on the smart watch, and the top portion of the smart watch will be set to be the normal display region.

It should be noted that the way of determining the posture of the smart watch can include but not limited to determination of the included angle.

Preferably, step 202 further includes step 2026, setting the brightness of all the regions of the smart watch to be the second preset brightness when it is determined that the included angle is less than a preset angle.

When the included angle is less than the preset angle, it indicates that to a greater degree the smart watch is parallel to the horizontal plane, and it can be determined that at this point the user does not watch the content displayed on the smart watch 100, thus the brightness of the whole display region of the smart watch 100 can be decreased to decrease the power consumption.

Preferably, the display method further includes setting the region the center of which is a target point of the ring and the area of which equals to a preset value to be the normal display region according to a received rotation command.

The determination angle of the G-sensor can be adjusted, and accordingly the position of the normal display region on the smart watch is adjusted. For example, if the determination angle of the G-sensor is rotated 180°, the determined normal display region is the bottom of the smart watch. Therefore, the user can normally watch the content displayed on the smart watch when the user lays down. Certainly, the user can cause the normal display region to rotate inside or outside any degrees to adjust the normal display region according to needs.

Preferably, step 204 further includes determining an image region of the smart watch which is displaying an image, overlapping the center of the image region with the center of the normal display region, and/or overlapping the start margin of the image region with the start margin of the normal display region, and/or overlapping the end margin of the image region with the end margin of the normal display region.

The smart watch can automatically display the image in the normal display region, to light the center of the image in normal brightness. The smart watch can also overlap the start margin and/or the end margin of the image with the start margin and/or the end margin of the normal display region, to light the start portion or the end portion of the image in normal brightness, thereby facilitating the user to browse the image from the start or end position, and also facilitating the user to drag the image to view the other portion of the image.

Preferably, step 204 further includes determining whether or not the area of the image region is greater than or equals to that of the normal display region, lighting the portion of the image region outside of the normal display region in third preset brightness which is less than the first preset brightness and lighting the region of the smart watch no image is displayed in which in the second preset brightness when the area of the image region is greater than or equals to that of the normal display region. Wherein, the second preset brightness is less than the third preset brightness.

When the area of the image displayed on the smart watch is greater than that of the normal display region, it indicates that a portion of the displayed image is displayed outside of the normal display region. However, as the center of the image still overlaps the center of the normal display region, a great portion of the image can be displayed in normal brightness. The portion of the image outside of the normal display region can be displayed in the third preset brightness, and the region of the smart watch no image is displayed in which is lighted in the second preset brightness, thus power is saved, and also the display of the smart watch has layering effect. The brightness gradually decreases from the image displayed in the normal display region to the image displayed outside of the normal display region and to the region no image is displayed in which, thus the user can view the image more easily.

Preferably, the display method further includes moving the image region according to a received image movement command, determining the portion of the image region outside of the normal display region in real time, and lighting the portion of the image region outside of the normal display region in the third preset brightness.

The user can move the image according to needs, to cause the needed portion to be displayed in the normal display region (that is, to be displayed in normal brightness). At the same time, during moving the image, the portion of the image displayed outside of the normal display region is displayed in the third preset brightness, while the brightness of the normal display region stays unchanged. Accordingly, the portion which can be seen by the user can always stay in normal brightness, and the portion which cannot be directly seen can always stay in lower brightness.

Preferably, the display method further includes moving the normal display region according to a received region movement command, determining the portion of the image region outside of the normal display region in real time, and lighting the portion of the image region outside of the normal display region in the third preset brightness.

The user can move the normal display region according to needs, to cause the normal display region to more meet user's watching habits. For example, if the user does not vertically watch the content displayed on the smart watch from up, and the user watches the content with the line of sight deviating from the vertical direction 30°, the normal display region can be moved toward inside (that is, user side) 30°. At the same time, during moving the region, the portion of the image displayed outside of the normal display region is displayed in the third preset brightness, while the brightness of the normal display region stays unchanged. Accordingly, the portion which can be seen by the user can always stay in normal brightness, and the portion which cannot be directly seen can always stay in lower brightness.

Preferably, the display method further includes adjusting the first preset brightness, the second preset brightness, and/or the third preset brightness according to a received brightness adjustment command.

The user can adjust the brightness of each region of the smart watch to satisfy actual needs.

In any of the above technical solutions, preferably, the display method further includes setting the size and/or shape of the normal display region according to a received region setting command.

The user can adjust each parameter of the display region according to needs, for example, prolong the display region or set the display region to be circular, to cause the display region to have strong characteristic and operability.

Preferably, before step 202, the display method further includes determining whether or not a preset function is started, going to step 203 if started, and going to step 202 if not started. Step 203 includes recognizing face and/or eyes in real time, and determining the normal display region according to the recognized face and/or eyes, to cause the normal display region to correspond to the recognized face and/or eyes.

After the face and/or eye recognition function is started, a face recognition device and/or an eye recognition device of the smart watch can be used to recognize the face and/or eyes, to accurately determine which region of the smart watch is facing the user, thereby setting the region which is facing the user to be the normal display region, and causing the normal display region to more conform to user's vision.

Preferably, the display method further includes detecting the temperature of the inside surface of the smart watch, and decreasing the brightness of the normal display region and/or decreasing the brightness of the other region when the temperature of the inside surface is less than a preset temperature.

Whether or not the smart watch is worn by the user can be determined by detecting the temperature of the inside surface of the smart watch. If the temperature of the inside surface is less than a certain temperature, for example, 30 degrees, it indicates that at current time the smart watch is not worn by the user, thus the brightness of all the regions can be decreased.

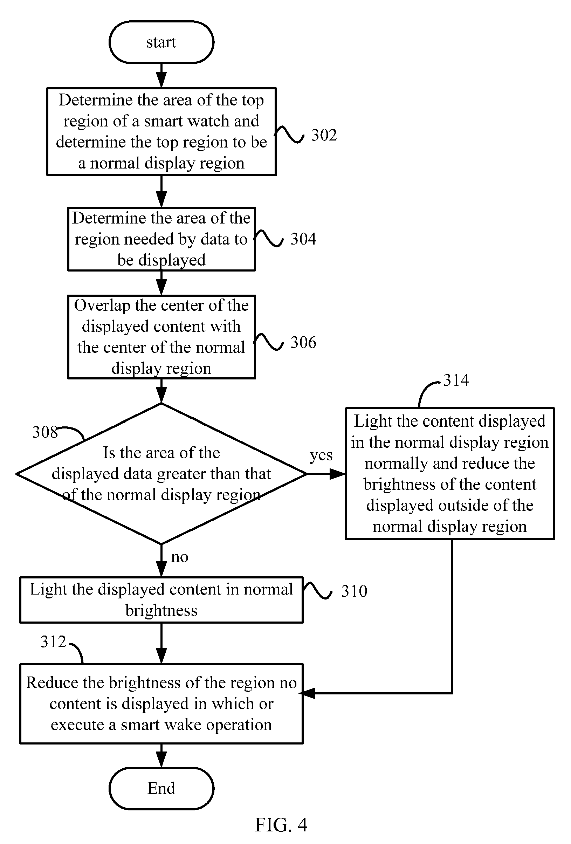

FIG. 4 is a detailed flow chart of a display method for a smart watch in accordance with an exemplary embodiment of the present invention.

As shown in FIG. 4, a display method for a smart watch in accordance with an exemplary embodiment of the present invention specifically includes the following steps.

In step 302, determining a posture of the smart watch, determining the area of the top region of the smart watch if the smart watch is in a used posture, and determining the top region to be a normal display region (viewable region).

In step 304, determining the area of the region needed by the content displayed by the smart watch.

In step 306, overlapping the displayed content with the normal display region.

In step 308, determining whether or not the area of the displayed content is greater than that of the normal display region.

In step 310, lighting the displayed content in normal brightness if the area of the displayed content is less than that of the normal display region.

In step 312, reducing the brightness of the region no content is displayed in which or executing a smart wake operation on the region no content is displayed in which.

In step 314, lighting the content displayed in the normal display region normally and reducing the brightness of the content displayed outside of the normal display region if the area of the displayed content is greater than that of the normal display region, and returning to step 312.

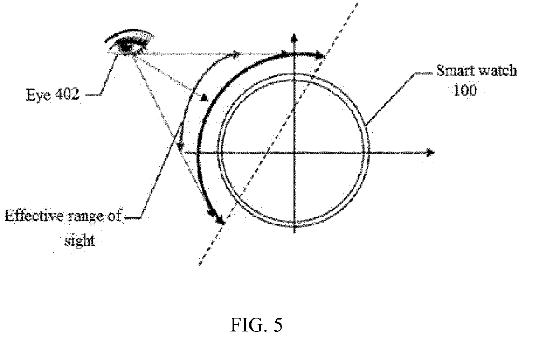

FIG. 5 is a schematic view showing that a user is watching a smart watch in accordance with an exemplary embodiment of the present invention.

As shown in FIG. 5, when the user (can be understood to be an eye 402 herein) watches the smart watch 100, as the smart watch is circular, the whole outside of the smart watch 100 can be used as the display region, but the region which can be directly seen by the eye 402 is just one range which is not greater than 180° in theory, that is the effective range of sight. When the whole region of the smart watch is used to display content, the eye 402 can only see a portion of content within the effect range of sight, and the content displayed in the other region cannot be directly seen. Thus, the brightness of the region which cannot be directly seen can be reduced, and only the brightness of the region within the effect range of sight can be kept in normal brightness, thereby to a greatest degree the power consumption of the smart watch 100 is reduced, user's use is not affected, and the battery life is prolonged.

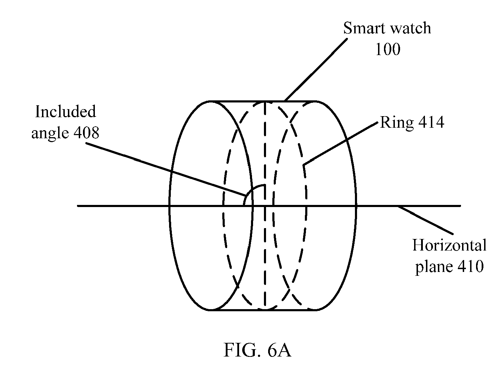

FIGs. 6A -6J are schematic views showing determination of a normal display region in accordance with an exemplary embodiment of the present invention.

As shown in FIG. 6A, when the user watches the smart watch 100, normally, the smart watch 100 is vertical to a horizontal plane 410. At this point, an included angle 408 between a ring 414 of the smart watch 100 and the horizontal plane 410 can be detected. If the included angle 408 is greater than a preset angle, it indicates that to a greater degree the smart watch 100 is vertical to the horizontal plane 410. For example, in FIG. 6A, the included angle 408 is 90°, at this point it can be determined that the user is watching the smart watch 100, thus the top region of the smart watch 100 will be set to be the normal display region.

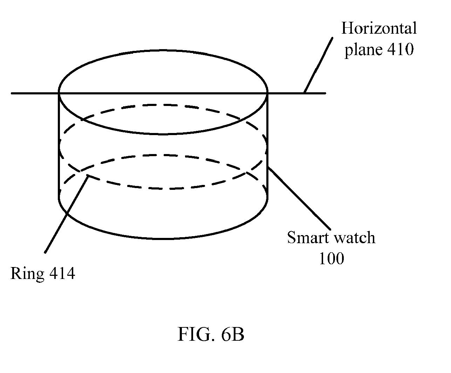

As shown in FIG. 6B, normally, when the user does not watch the smart watch 100, the smart watch 100 is worn on the wrist of the user and the arm of the user is vertical to the ground, or the smart watch 100 is laid flat. Under above conditions, the included angle 408 between the ring 414 of the smart watch 100 and the horizontal plane 410 is smaller. Thus, when the included angle 408 is smaller, it can be determined that the smart watch 100 is not used. For example, in FIG. 6B, the included angle 408 is 0°, the ring 414 of the smart watch 100 is parallel to the horizontal plane 410, at this point the brightness of all the regions of the smart watch 100 can be reduced.

After illustrating the change of the normal display region 404 when the smart watch 100 is rotated in space, the following will mainly illustrate the intelligent determination of the normal display region 404 (the following will give an illustration according to a vertex 420 corresponding to the center of the normal display region) when the smart watch 100 is rotated in a vertical plane (that is, the user rotates his/her wrist to watch the smart watch).

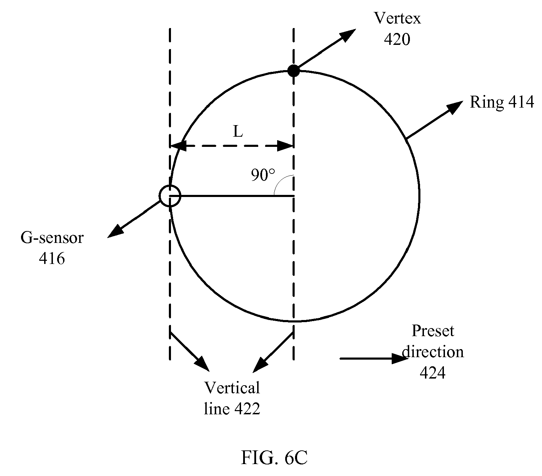

As shown in FIG. 6C, a G-sensor 416 can be used to determine a fixed point of the smart watch 100.

The G-sensor 416 can be arranged at any position of the ring 414. A computing equation $L = R \times \sin\alpha$ can be set, wherein R is the radius of the ring 414, $\alpha$ is the included angle between a connection line formed by the center of the ring 414 and the center of the G-sensor 416 and a vertical line 422 (automatically determined as an acute angle), L is a movement distance of the vertical line 422 across the center of the G-sensor 416 in a preset direction 424. After moving the vertical line 422 the distance L toward the center of the ring 414, two intersection points are formed between the vertical line 422 and the ring 414. Wherein, the intersection point arranged above the horizontal plane where the G-sensor 416 stays, that is the vertex 420, can be taken as the center of the normal display region 404.

For example, the G-sensor 416 is arranged at a point of tangency formed by the vertical line 422 and the ring 414. A connection line formed by the center of the ring 414 and the G-sensor 416 is vertical to the vertical line 422. According to the equation it can be determined that $L = R\sin 90° = R$. That is, after moving the vertical line 422 R in the preset direction 424, the intersection point formed by the vertical line 422 and the ring 414 and arranged above the horizontal plane is the vertex 420.

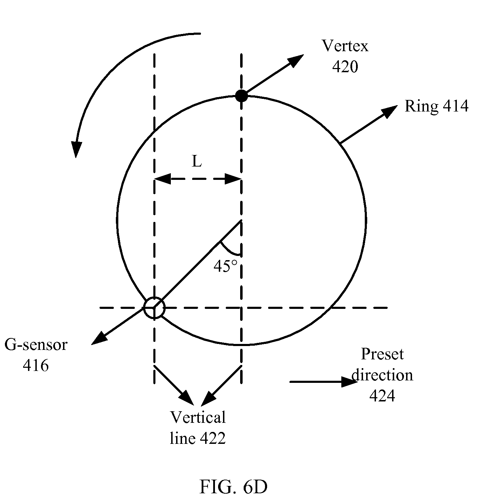

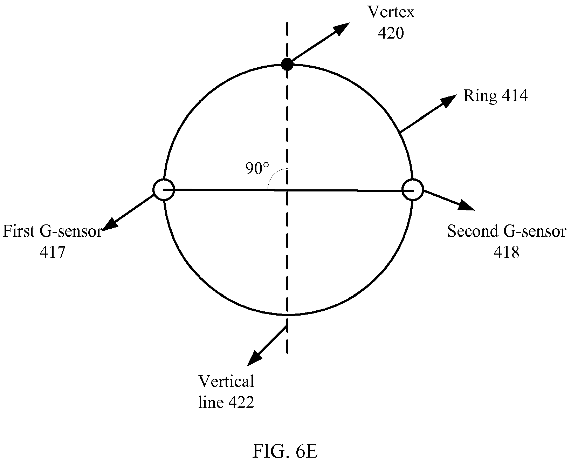

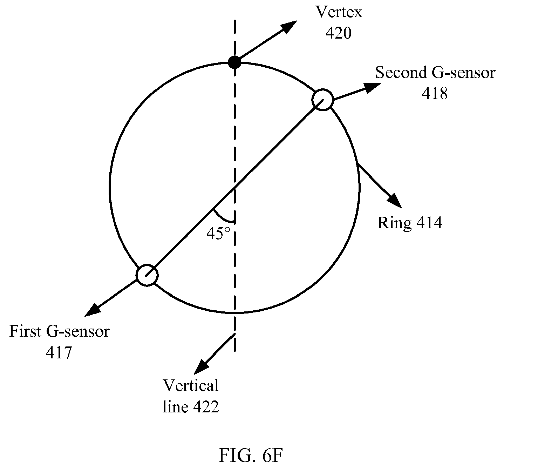

As shown in FIG. 6D, when the ring 414 is rotated in the vertical plane (normally, the user rotates his/her wrist), for example, rotated toward one side 45°, the position of the G-sensor 416 in the space changes accordingly. It can be determined that the included angle between the connection line formed by the center of the ring 414 and the G-sensor 416 and the vertical line 422 is 45° determined by 90° minus 45°. Furthermore, according to the equation L=Rsin45°, it can be determined that L is $R\sqrt{2}/2$, that is, after moving the vertical line 422 across the G-sensor 416 $R\sqrt{2}/2$ toward the center of the ring 414, the intersection point formed by the vertical line 422 and the ring 414 and arranged above the horizontal plane is the vertex 420. Certainly, a number of G-sensors may be employed to determine the vertex 420. For example, as shown in FIG. 6E, two G-sensors, the first G-sensor 417 and the second G-sensor 418 are employed. The two G-sensors are respectively arranged at two ends of a central line across the the center of the ring 414. As the position information of the two G-sensors are known, the connection line formed by the two G-sensors can be obtained, then the center of the connection line can be obtained. There are two intersection points between the vertical line 422 across the center and the ring 414, wherein the intersection point arranged above the horizontal plane where any of the G-sensors stays is the vertex 420. As shown in FIG. 6F, when the ring 414 is rotated in the vertical plane (normally, the user rotates his/her wrist), the center of the connection line formed by the two G-sensors still overlaps the center of the ring 414, and there are two intersection points between the vertical line 422 across the center of the connection line formed by the two G-sensors and the ring 414, wherein the intersection point arranged above the horizontal plane where any of the G-sensors stays is the vertex 420.

The user can adjust the determination angle of the G-sensor according to needs. For example, when one G-sensor is employed, if the determination angle of the G-sensor is rotated 180°, the determination way is similar to FIG. 6C and FIG. 6D, and the difference is that the intersection point formed by the vertical line 422 and the ring 414 and arranged below the horizontal plane where the G-sensor 416 stays is set to be the center of the normal display region 404.

Similarly, the user can rotate the determination angle of he G-sensor any degrees to cause the normal display region 404 to be proper for watching. After the user adjusts the determination angle θ of the G-sensor (among 0° -360°), the equation used for determining the vertex 420 changes accordingly. At this point L=Rsin(90°+β) -Rsinθ, wherein R is the radius of the ring 414, β is the rotation angle of the ring 414 within the vertical plane (among 0° -180°), L is the movement distance of the vertical line 422 across the center of the G-sensor in the preset direction 424 (L can be a negative value, and when the vertical line 422 is moved toward a direction opposite to the preset direction 424, L is a negative value), and θ is the adjusted determination angle of the G-sensor. When θ is within 0° -90 or within 270° -360°, the intersection point between the vertical line 422 and the ring 414 and arranged above the horizontal plane where the G-sensor 414 stays is set to be the vertex 420. When θ is within 90° -270°, the intersection point formed by the vertical line 422 and the ring 414 and arranged below the horizontal plane where the G-sensor 414 stays is set to be the vertex 420.

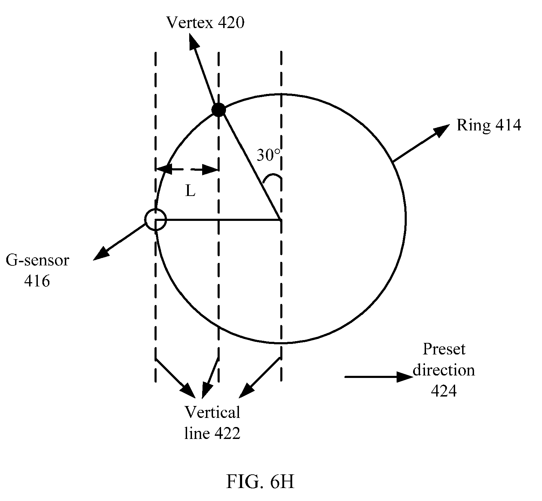

As shown in FIG. 6H, the determination angle of the G-sensor can be rotated toward one side 30°, that is θ=30°, then at this point L=Rsin(90° +0) -Rsin30°=0.5R. That is, after moving the vertical line 422 across the center of the G-sensor 0.5R in the preset direction 424, the intersection point formed by the vertical line 422 and the ring 414 and arranged above the horizontal plane where the G-sensor 414 stays is the vertex 420.

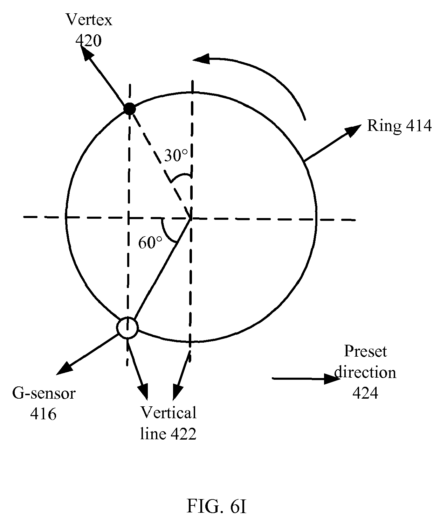

As shown in FIG. 6I, the ring 414 is rotated 60° within the vertical plane, that is β=60°, at this point L=Rsin(90° +60°) -Rsin30°=0. That is, at this point the intersection point formed by the vertical line 422 and the ring 414 and arranged above the horizontal plane where the G-sensor 414 stays is the vertex 420, and the movement distance of the vertical line 422 is zero.

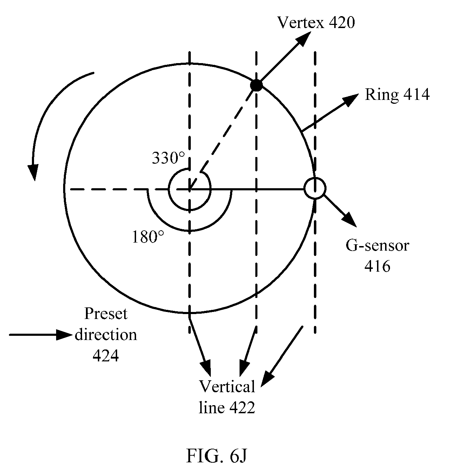

As shown in FIG. 6J, if the determination angle of the G-sensor is rotated toward one side 330°, that is θ=330°, then the ring 414 is rotated 180° within the vertical plane, that is β=180°, at this point L=Rsin(90° +180°) -Rsin330°=-0.5R. That is, after moving the vertical line 422 across the center of the G-sensor 416 0.5R in a direction opposite to the preset direction 424, the intersection point formed by the vertical line 422 and the ring 414 and arranged above the horizontal plane where the G-sensor 414 stays is the vertex 420.

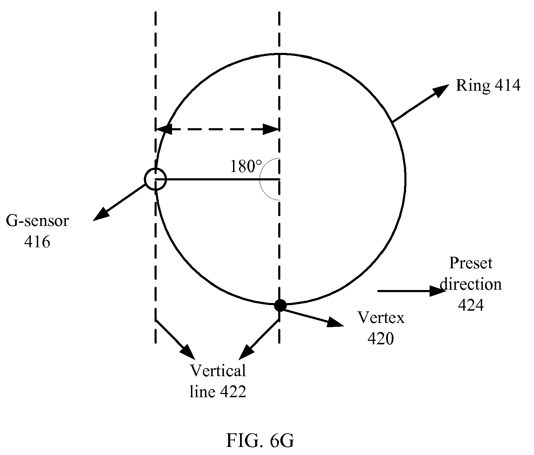

For FIG. 6G, the determination angle of the G-sensor is rotated 180°, that is θ=180°, and L=Rsin(90° +0) -Rsin180°=R. That is, after moving the vertical line 422 R in the preset direction 424, the intersection points between the vertical line 422 and the ring 414 are respectively arranged at the top and bottom of the ring 414 in the space. As 180° falls within 90° -270°, the bottom of the ring 414 in the space is set to be the vertex 420 and the normal display region 404 is set according to the vertex 420.

It should be noted that the method of determining the vertex 420 can include but not limited to the above methods.

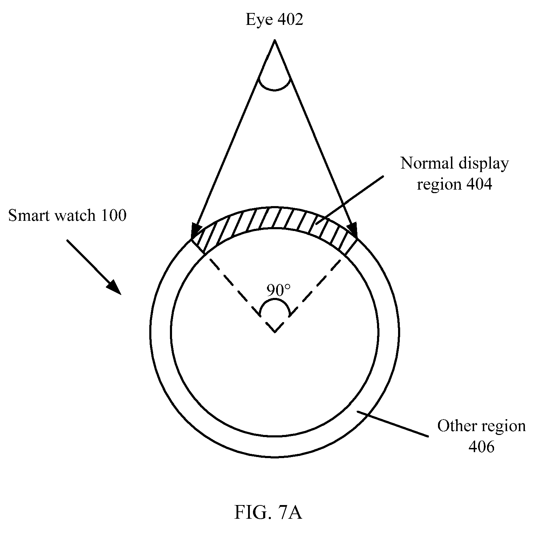

FIGs. 7A -7D are schematic views showing display of a smart watch in accordance with an exemplary embodiment of the present invention.

As shown in FIG. 7A, if the eye 402 watches the smart watch 402 from up, then the region of the smart watch 100 which can be directly seen by the eye 402 is the normal display region. The region is lighted in first preset brightness (normal brightness), and the other region 406 (which cannot be directly seen by the eye 402) is lighted in second preset brightness. Therefore, it can ensure that the brightness of the region of the smart watch which can be directly seen by the user is normal, and the brightness of the region which cannot be directly seen by the user is lower or the region which cannot be directly seen by the user is not lighted.

When the area of the image displayed on the smart watch 100 is less than that of the normal display region 404, the smart watch 100 automatically overlaps the center of the image with the center of the normal display region 404, to cause the whole image to be lighted in normal brightness.

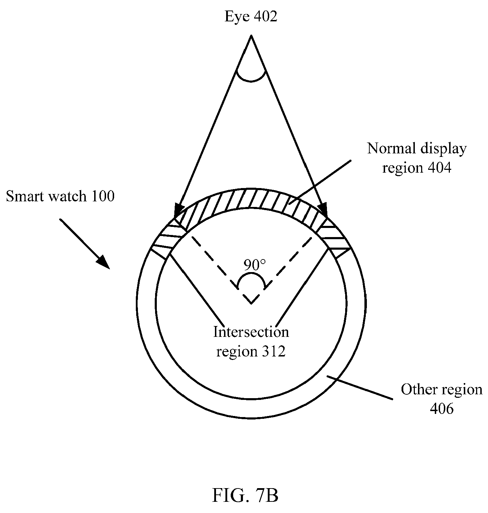

As shown in FIG. 7B, if the area of the image displayed on the smart watch is greater than that of the normal display region 404, the portion of the image displayed outside of the normal display region 404 is an intersection region 412. Then the brightness of the normal display region 404 can stay unchanged, and the brightness of the intersection region 412 can be set to be third preset brightness which falls in between the first preset brightness and the second preset brightness, therefore on the whole the brightness of the smart watch 100 gradually decreases from the normal display region 304 to the intersection region 412 and to the other region 406.

The center of the image displayed in the normal display region 404 can overlap the center of the normal display region 404. When the area of the image is less than that of the normal display region 404, to facilitate the user to view the image, the image can be displayed in the center of the normal display region 404. The start or end margin of the image can also be set to overlap the start or end margin of the normal display region 404. Thus, when the area of the image is greater than that of the normal display region, the user can view the image from the start or end portion of the image, thereby facilitating the user to drag the image from one end to browse the whole image.

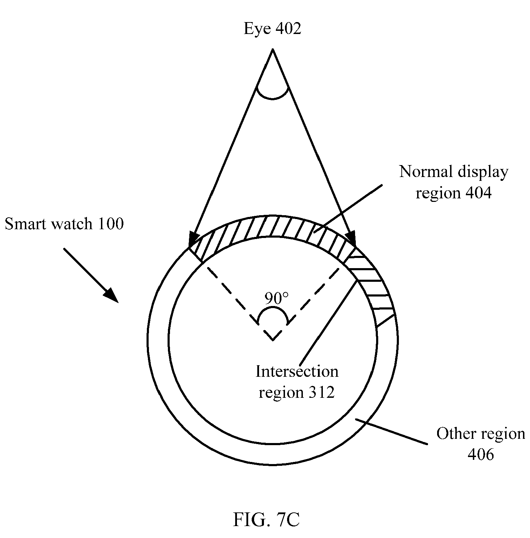

As shown in FIG. 7C, if the user wants to view the intersection region 412, the user can move the image to cause the intersection region 412 to be moved into the normal display region 404. For example, when moving the image in clockwise, then the intersection region 412 in clockwise of the normal display region 404 will increase, and the intersection region 412 in anticlockwise of the normal display region 404 will decrease, thereby ensuring that the brightness of the content currently viewed by the user is always normal, and there is no need to increase the brightness of the other region which cannot be directly seen by the user.

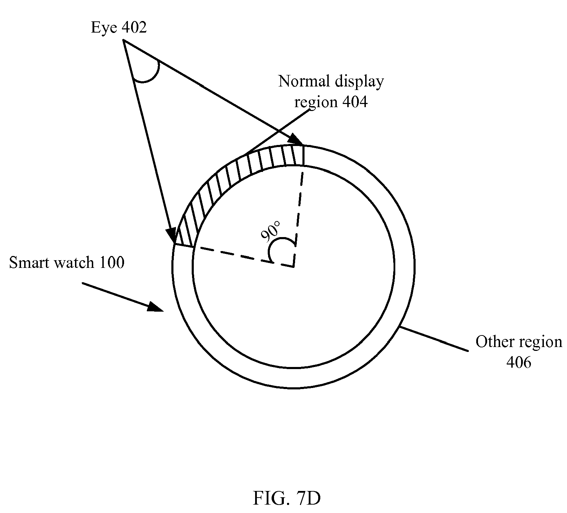

As shown in FIG. 7D, the user can adjust the position of the normal display region 404 on the smart watch 100 according to watching habits. This can be realized by directly adjusting the position of the normal display region 404, and can also be realized by adjusting the determination method for the G-sensor. Therefore, the intelligent display region can be set to be outside of the top of the smart watch 100, for example, rotated a certain degrees in user's direction (rotated toward inner side), thus the eye 402 can see the normal display region 404 by tilting a smaller angle.

The above illustrates the technical solution of the present invention in conjunction with the accompanying drawings. In related art, the display screen takes up the whole outside of the smart watch to display content. However, the user can only see a part of the content, and lighting the region which cannot be directly seen will bring a waste of power. By means of the technical solution of the present invention, according to the posture of the smart watch, which region can be seen by the user can be determined, so that the brightness of the region can be set to be normal brightness, and the brightness of the other region which cannot be directly seen can be reduced, thereby prolonging the battery life of the smart watch and improving user's experience.

In the present invention, the term "the first", "the second", and "the third" are only used to describe purposes, and should not be understood to indicate or imply importance. The term "a number of" indicates two or more than two except additional specific definition.

The foregoing descriptions are merely preferred embodiments of the present disclosure, rather than limiting the present disclosure. Various modifications and alterations may be made to the present disclosure for those skilled in the art. Any modification, equivalent substitution, improvement or the like made within the spirit and principle of the present disclosure shall fall into the protection scope of the present disclosure.

## Claims

1. A smart watch comprising:

   a posture monitoring unit configured to monitor a posture of the smart watch in real time and determine a normal display region of the smart watch according to the posture; and
   a displaying unit configured to display content to be displayed in the normal display region.

2. The smart watch of claim 1, wherein the posture monitoring unit comprises an included angle determining sub-unit configured to compute an included angle between a plane where a ring of the smart watch stays and the horizontal plane in real time and determine whether or not the included angle is within a preset angle range, and a region setting sub-unit configured to set a region the center of which is a vertex of the ring in space and the area of which equals to a preset value to be the normal display region when the included angle determining sub-unit determines that the included angle is within the preset angle range.

3. The smart watch of claim 2, wherein the displaying unit comprises a brightness setting unit configured to set the brightness of the normal display region to be first preset brightness and set the brightness of the other region of the smart watch to be second preset brightness which is less than the first preset brightness.

4. The smart watch of claim 3, wherein the brightness setting unit is further configured to set all the regions of the smart watch to be the second preset brightness when the included angle determining sub-unit determines that the included angle is not within the preset angle range.

5. The smart watch of claim 2, wherein the region setting sub-unit is further configured to set the region the center of which is a target point of the ring and the area of which equals to the preset value to be the normal display region according to a received rotation command.

6. The smart watch of claim 1, wherein the smart watch further comprises an image adjusting unit configured to determine an image region of the smart watch which is displaying an image, overlap the center of the image region with the center of the normal display region, and/or overlap a start margin of the image region with a start margin of the normal display region, and/or overlap an end margin of the image region with an end margin of the normal display region.

7. The smart watch of claim 6, wherein the brightness setting unit comprises an area determining sub-unit configured to determine whether or not the area of the image region is greater than or equals to that of the normal display region, and a brightness assigning sub-unit configured to light the portion of the image region outside of the normal display region in third preset brightness which is less than the first preset brightness and light the region of the smart watch no image is displayed in which in the second preset brightness when the area determining sub-unit determines that the area of the image region is greater than or equals to that of the normal display region, wherein, the second preset brightness is less than the third preset brightness.

8. The smart watch of claim 7, wherein the smart watch further comprises an image moving unit configured to move the image region according to a received image movement command; the brightness assigning sub-unit is further configured to determine the portion of the image region outside of the normal display region in real time, and light the portion of the image region outside of the normal display region in the third preset brightness.

9. The smart watch of claim 7, wherein the smart watch further comprises a region moving unit configured to move the normal display region according to a received region movement command; the brightness assigning sub-unit is further configured to determine the portion of the image region outside of the normal display region in real time, and light the portion of the image region outside of the normal display region in the third preset brightness.

10. The smart watch of claim 7, wherein the smart watch further comprises a brightness adjusting unit configured to adjust the first preset brightness, the second preset brightness, and/or the third preset brightness according to a received brightness adjustment command.

11. The smart watch of any of claims 1-10, wherein the smart watch further comprises a region adjusting unit configured to set the size and/or shape of the normal display region according to a received region setting command.

12. The smart watch of any of claims 1-10, wherein the smart watch further comprises a face recognition unit configured to recognize face and/or eyes in real time when a preset function is started, and determine the normal display region according to the recognized face and/or eyes, to cause the normal display region to correspond to the recognized face and/or eyes.

13. The smart watch of any of claims 1-10, wherein the smart watch further comprises a temperature detecting unit configured to detect the temperature of the inside surface of the smart watch, and reduce the brightness of the normal display region and/or reduce the brightness of the other region when the temperature of the inside surface is less than a preset temperature.

14. A display method for a smart watch, comprising:

step 202, monitoring a posture of the smart watch in real time and determine a normal display region of the smart watch according to the posture; and
step 204, displaying content to be displayed in the normal display region.

15. The display method for a smart watch of claim 14, wherein step 202 comprises step 2022, computing an included angle between a plane where a ring of the smart watch stays and the horizontal plane in real time and determining whether or not the included angle is within a preset angle range, and step 2024, setting a region the center of which is a vertex of the ring in space and the area of which equals to a preset value to be the normal display region when it is determined that the included angle is within the preset angle range.

16. The display method for a smart watch of claim 14, wherein step 204 further comprises setting the brightness of the normal display region to be first preset brightness and setting the brightness of the other region of the smart watch to be second preset brightness which is less than the first preset brightness.

17. The display method for a smart watch of claim 15, wherein step 202 further comprises step 2026, setting all the regions of the smart watch to be the second preset brightness when it is determined that the included angle is not within the preset angle range.

18. The display method for a smart watch of claim 15, wherein the display method further comprises setting the region the center of which is a target point of the ring and the area of which equals to the preset value to be the normal display region according to a received rotation command.

19. The display method for a smart watch of claim 14, wherein step 204 further comprises determining an image region of the smart watch which is displaying an image, overlapping the center of the image region with the center of the normal display region, and/or overlapping a start margin of the image region with a start margin of the normal display region, and/or overlapping an end margin of the image region with an end margin of the normal display region.

20. The display method for a smart watch of claim 19, wherein step 204 further comprises determining whether or not the area of the image region is greater than or equals to that of the normal display region, and lighting the portion of the image region outside of the normal display region in third preset brightness which is less than the first preset brightness and lighting the region of the smart watch no image is displayed in which in the second preset brightness when it is determined that the area of the image region is greater than or equals to that of the normal display region, wherein, the second preset brightness is less than the third preset brightness.

21. The display method for a smart watch of claim 20, wherein the display method further comprises moving the image region according to a received image movement command, determining the portion of the image region outside of the normal display region in real time, and lighting the portion of the image region outside of the normal display region in the third preset brightness.

22. The display method for a smart watch of claim 20, wherein the display method further comprises moving the normal display region according to a received region movement command, determining the portion of the image region outside of the normal display region in real time, and lighting the portion of the image region outside of the normal display region in the third preset brightness.

23. The display method for a smart watch of claim 20, wherein the display method further comprises adjusting the first preset brightness, the second preset brightness, and/or the third preset brightness according to a received brightness adjustment command.

24. The display method for a smart watch of any of claims 14 -23, wherein the display method further comprises setting the size and/or shape of the normal display region according to a received region setting command.

25. The display method for a smart watch of any of claims 14 -23, wherein before step 202, the display method further comprises determining whether or not a preset function is started, going to step 203 if the preset function is started, and going to step 202 if the preset function is not started; step 203 comprises recognizing face and/or eyes in real time, and determining the normal display region according to the recognized face and/or eyes, to cause the normal display region to correspond to the recognized face and/or eyes.

26. The display method for a smart watch of any of claims 14-23, wherein the display method further comprises detecting the temperature of the inside surface of the smart watch, and reducing the brightness of the normal display region and/or reducing the brightness of the other region when the temperature of the inside surface is less than a preset temperature.

Smart watch
10

Tuesday
13: 50
2013.5.28
Appointment

Image 12

FIG. 1 (Prior art)

Included angle determining sub-unit 1022

Region setting sub-unit 1024

Posture monitoring unit 102

Area determining sub-unit 10422

Brightness assigning sub-unit 10424

Brightness setting unit 1042

Displaying unit 104

Image adjusting unit 106

Image moving unit 108

Region moving unit 110

Brightness adjusting unit 112

Region adjusting unit 114

Face recognition unit 116

Temperature detecting unit 118

Smart watch 100

FIG. 2

Start

Monitor a posture of a smart watch in real time and determine a normal display region of the smart watch according to the posture — 202

Display content to be displayed in the normal display region — 204

End

FIG. 3

start

Determine the area of the top region of a smart watch and determine the top region to be a normal display region ～ 302

Determine the area of the region needed by data to be displayed ～ 304

Overlap the center of the displayed content with the center of the normal display region ～ 306

308 Is the area of the displayed data greater than that of the normal display region

yes → 314 Light the content displayed in the normal display region normally and reduce the brightness of the content displayed outside of the normal display region

no

Light the displayed content in normal brightness ～ 310

312 Reduce the brightness of the region no content is displayed in which or execute a smart wake operation

End

FIG. 4

Eye 402

Smart watch 100

Effective range of sight

FIG. 5

FIG. 6A

Horizontal plane 410

Smart watch 100

Ring 414

FIG. 6B

Vertex
420

Ring 414

L

90°

G-sensor
416

Preset
direction
424

Vertical
line 422

FIG. 6C

FIG. 6D

Vertex
420

Ring 414

90°

First G-sensor
417

Second G-sensor
418

Vertical
line 422

FIG. 6E

FIG. 6F

Ring 414

G-sensor
416

180°

Preset
direction
424

Vertex
420

Vertical
line 422

FIG. 6G

Vertex 420

Ring 414

30°

L

G-sensor
416

Preset
direction
424

Vertical
line 422

FIG. 6H

Vertex
420

30°

Ring 414

60°

G-sensor
416

Vertical
line 422

Preset
direction
424

FIG. 6I

FIG. 6J

Eye 402

Normal display
region 404

Smart watch 100

90°

Other region
406

FIG. 7A

Eye 402

Normal display
region 404

Smart watch 100

90°

Intersection
region 312

Other region
406

FIG. 7B

Eye 402

Normal display
region 404

Smart watch 100

90°

Intersection
region 312

Other region
406

FIG. 7C

Eye 402

Normal display
region 404

90°

Smart watch 100

Other region
406

FIG. 7D

## INTERNATIONAL SEARCH REPORT

| | International application No. |
|---|---|
| | PCT/CN2013/077486 |

### A. CLASSIFICATION OF SUBJECT MATTER

G09G 5/26 (2006.01) i

According to International Patent Classification (IPC) or to both national classification and IPC

### B. FIELDS SEARCHED

Minimum documentation searched (classification system followed by classification symbols)

IPC: G09G

Documentation searched other than minimum documentation to the extent that such documents are included in the fields searched

Electronic data base consulted during the international search (name of data base and, where practicable, search terms used)

CNPAT, CNKI, EPODOC, WPI: WATCH ANGLE POSE DISPLAY AREA SMART WATCH

### C. DOCUMENTS CONSIDERED TO BE RELEVANT

| Category* | Citation of document, with indication, where appropriate, of the relevant passages | Relevant to claim No. |
|---|---|---|
| X | CN 101266777 A (CASIO COMPUTER CO., LTD.) 17 September 2008 (17.09.2008) description, page 1, line 21 to page 2, line 27 | 1-26 |
| A | CN 201289594 Y (YANG, Shujun) 12 August 2009 (12.08.2009) the whole document | 1-26 |
| A | CN 1700242 A (BEIJING VIMICRO CORP.) 23 November 2005 (23.11.2005) the whole document | 1-26 |

☐ Further documents are listed in the continuation of Box C.　　☒ See patent family annex.

| | |
|---|---|
| *　　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"document member of the same patent family |

| Date of the actual completion of the international search | Date of mailing of the international search report |
|---|---|
| 03 March 2014 (03.03.2014) | 20 March 2014 (20.03.2014) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>WANG, Ning<br><br>Telephone No. (86-10) 62414033 |

Form PCT/ISA /210 (second sheet) (July 2009)

## INTERNATIONAL SEARCH REPORT
Information on patent family members

| | International application No. |
|---|---|
| | PCT/CN2013/077486 |

| Patent Documents referred in the Report | Publication Date | Patent Family | Publication Date |
|---|---|---|---|
| CN 101266777 A | 17.09.2008 | US 2008/0225039 A1 | 18.09.2008 |
| | | JP 2008225378 A | 25.09.2008 |
| CN 201289594 Y | 12.08.2009 | None | |
| CN 1700242 A | 23.11.2005 | None | |

Form PCT/ISA/210 (patent family annex) (July 2009)